# EUROPEAN PATENT APPLICATION

(11) **EP 4 227 836 A1**
(43) Date of publication of application: **16.08.2023**
(21) Application number: 20956705.6
(22) Date of filing: 07.10.2020
(51) Int. Cl.: G06F 21/62, G06F 21/71

(54) **CONTROL METHOD, CONTROL PROGRAM, AND INFORMATION PROCESSING DEVICE**

(71) Applicant: FUJITSU LIMITED, Kawasaki-shi, Kanagawa 211-8588 (JP)
(72) Inventor: TSUNODA, Tadanobu, Kawasaki-shi, Kanagawa 211-8588 (JP); YAMAMOTO, Dai, Kawasaki-shi, Kanagawa 211-8588 (JP); NIMURA, Kazuaki, Kawasaki-shi, Kanagawa 211-8588 (JP)
(74) Representative: Hoffmann Eitle
(86) International application number: PCT/JP2020/037976
(87) International publication number: WO 2022/074757

(57) **Abstract**

A control method according to an embodiment includes: when accepting execution instructions for a first task and a second task, adding an operation code that causes execution of an operation, to a processing program that corresponds to the first task, and generating a first program that includes the processing program and the operation code; encrypting a second program that corresponds to the second task to generate encrypted data, by using an operation result obtained based on the execution of the operation; and transmitting the first program and the encrypted data to a device that corresponds to the first task.

## Description

### FIELD

The present disclosure relates to a control method, a control program, and an information processing device.

### BACKGROUND

With the advancement of techniques for the information and communication technology (ICT), a variety of techniques have been developed to support business. Then, when the business flow is executed, the efficiency of the business can be improved by using the variety of techniques for supporting the business.

Meanwhile, cybercrime is on the rise, and there is a growing interest in techniques for executing the business with high reliability.

In this regard, techniques relating to protecting or controlling document components are known (for example, Patent Document 1).

### SUMMARY

### TECHNICAL PROBLEM

However, for example, there is a case where the execution order of tasks is prescribed in the business flow. In this case, for example, in executing the business flow, it is sometimes difficult to execute the business with high reliability. For example, even if the execution result of the business flow is obtained, there is a case where it is not known whether the obtained execution result has been obtained by certainly executing the tasks in the prescribed order.

In one aspect, an object of the present disclosure is to provide a technique for executing a business flow with high reliability.

### SOLUTION TO PROBLEM

A control method according to one mode of the present disclosure includes: when accepting execution instructions for a first task and a second task, adding an operation code that causes execution of an operation, to a processing program that corresponds to the first task, and generating a first program that includes the processing program and the operation code; encrypting a second program that corresponds to the second task to generate encrypted data, by using an operation result obtained based on the execution of the operation; and transmitting the first program and the encrypted data to a device that corresponds to the first task.

### ADVANTAGEOUS EFFECTS OF INVENTION

A business flow may be executed with high reliability.

### BRIEF DESCRIPTION OF DRAWINGS

FIG. 1 is a diagram illustrating a configuration of a control system according to an embodiment.
FIG. 2 is a diagram illustrating a functional block configuration of a server according to the embodiment.
FIG. 3 is a diagram illustrating a functional block configuration of a terminal according to the embodiment.
FIG. 4 is a diagram illustrating business information according to the embodiment.
FIG. 5 is a diagram illustrating a document according to the embodiment.
FIG. 6 is a diagram illustrating process information according to the embodiment.
FIG. 7 is a diagram illustrating notification destination information according to the embodiment.
FIG. 8 is a diagram illustrating a work flow of an encapsulated data transmission process according to the embodiment.
FIG. 9 is a diagram illustrating an approval procedure according to the embodiment.
FIG. 10 is a diagram illustrating an approval window according to the embodiment.
FIG. 11 is a diagram illustrating a work flow of an encapsulation process according to the embodiment.
FIG. 12 is a diagram illustrating a flow of the encapsulation process according to the embodiment.
FIG. 13 is a diagram illustrating a work flow of an execution process for steps of a business flow according to the embodiment.
FIG. 14 is a diagram illustrating a flow of decrypting encapsulated data according to the embodiment.
FIG. 15 is a diagram illustrating addition of a proof-of-execution operation code for proving the execution order of a plurality of codes in a procedure according to the embodiment.
FIG. 16 is a diagram illustrating a hardware configuration of a computer for implementing the server and the terminal according to the embodiment.

### DESCRIPTION OF EMBODIMENTS

Hereinafter, several embodiments of the present disclosure will be described in detail with reference to the drawings. Note that corresponding elements in a plurality of drawings will be denoted with the same reference sign.

As described above, with the advancement of techniques for ICT, a variety of techniques have been developed to support business. Then, when the business flow is executed, the efficiency of the business can be improved by using the variety of techniques for supporting the business.

As an example, groupware equipped with a workflow system or the like that supports the execution of business flow within the company has been used. In addition, as another example, there is known a mechanism called robotic process automation (RPA) that automates tasks by software robots. By introducing RPA, the robots can be caused to execute processes that were previously performed manually. Then, by causing software to execute at least a part of the execution of the business as a proxy, improvement in the efficiency and the productivity of the business may be achieved.

However, for example, when the business is executed with the support of such software, it is difficult to execute the business with high reliability in some cases. For example, there is a case where the execution order of steps is prescribed in a business flow. In this case, for example, even if the execution result of the business flow is obtained, there is a case where it is not known whether the obtained execution result has been obtained by certainly executing the tasks in the prescribed order.

For example, if a terminal that executes the business flow is tampered with by a cyberattack or the like, it is sometimes difficult to detect an unauthorized work even if being performed. As one example, a replay attack can be mentioned. In the replay attack, a log output by a terminal that executes a step of a business flow is stored, and the same log is transmitted when the step is executed the next time even though the step is not executed. When undergoing such a replay attack, a result that gives an impression as if the step would be working correctly is output even though the step has not been executed. In this case, it is difficult to detect that the step of the business flow has not actually been executed, even by checking at the execution result of the business flow.

In addition, for example, in RPA, the robot in the next step often uses the result obtained by the robot executing the previous step. Therefore, the desired result will sometimes not be obtained if each step of the flow is not executed properly in order.

For this reason, there is a demand for the provision of a technique that can guarantee that the execution result has been obtained by certainly executing the steps in the prescribed order, for example, when the execution result of the business flow is obtained.

In the embodiments described below, for example, when execution instructions for a first task and a second task are accepted, an operation code that causes execution of an operation is added to a program corresponding to the first task, and a first program is generated. In addition, encrypted data is generated by encrypting a second program corresponding to the second task, using the operation result obtained based on the execution of the operation. Then, the first program and the encrypted data generated in this manner are transmitted to the device corresponding to the first task.

For example, by executing encryption as described above, a device that receives the first program and the encrypted data is not allowed to decrypt the encrypted second program until executing the first program to execute the first task and acquiring the operation result. Accordingly, the execution of the first program can be forced before the execution of the second program. Then, when the second task can be executed by executing the second program, it may be guaranteed that the first task has been completed. Hereinafter, the embodiments will be described in more detail.

Note that, in the following embodiments, although the business flow will be taken as an example to describe the embodiments, the object to which the embodiments are applied is not limited to the business flow, and the embodiments may be applied to other processes in which it is demanded to guarantee the order of execution.

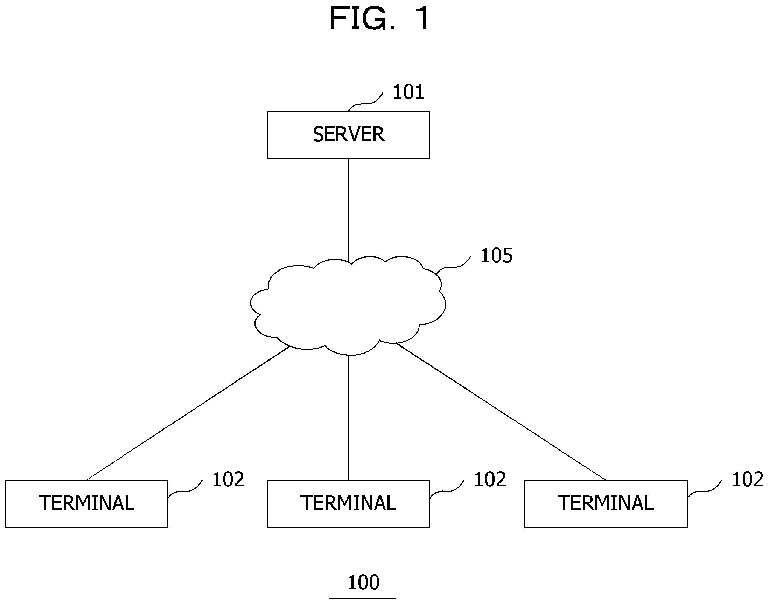

FIG. 1 is a diagram illustrating a configuration of a control system 100 according to an embodiment. The control system 100 may include, for example, a server 101 and a terminal 102. The server 101 may be, for example, an information processing device such as a server computer, a personal computer, or a mobile computer. In addition, the terminal 102 may be, for example, an information processing device such as a personal computer, a mobile computer, a tablet terminal, a smartphone, a mobile phone, inspection equipment, manufacturing equipment, and management equipment. Note that the server 101 and the terminal 102 may communicate via a network 105 such as the Internet and a campus network, for example.

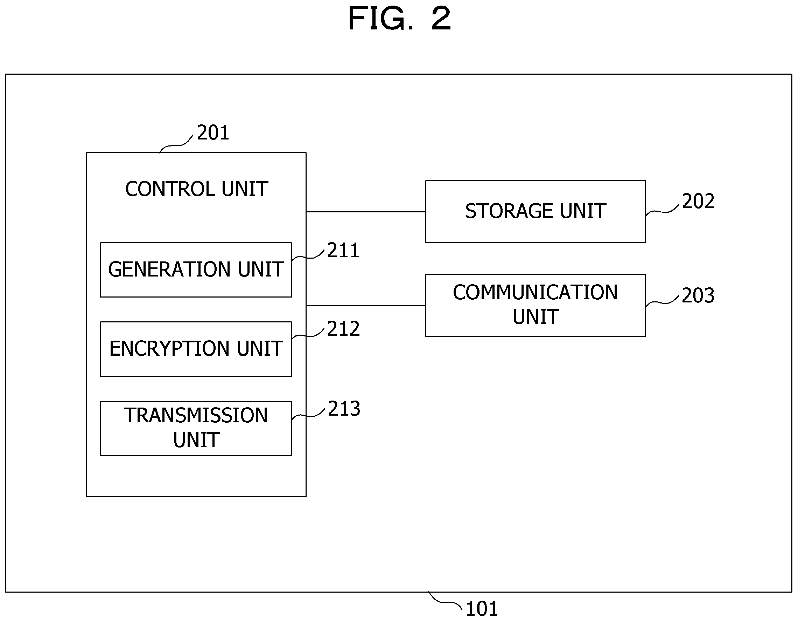

FIG. 2 is a diagram illustrating a functional block configuration of the server 101 according to the embodiment. The server 101 includes, for example, a control unit 201, a storage unit 202, and a communication unit 203. For example, the control unit 201 includes a generation unit 211, an encryption unit 212, a transmission unit 213, and the like and may include other functional units. The storage unit 202 stores, for example, information such as business information 400, documents 500, process information 600, and notification destination information 700, which will be described later. The communication unit 203 communicates with another device in accordance with an instruction from the control unit 201, for example. For example, the communication unit 203 communicates with the terminal 102. Details of each of these units and details of the information stored in the storage unit 202 will be described later.

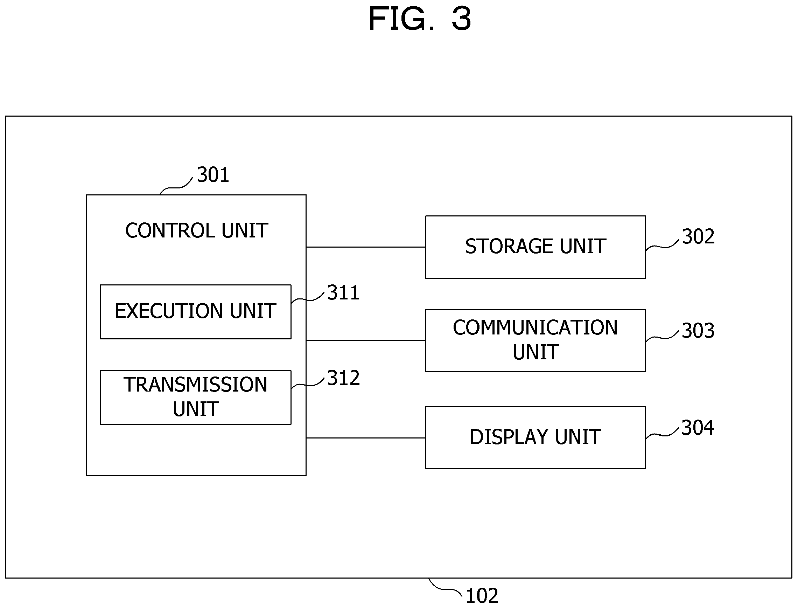

FIG. 3 is a diagram illustrating a functional block configuration of the terminal 102 according to the embodiment. The terminal 102 includes, for example, a control unit 301, a storage unit 302, a communication unit 303, and a display unit 304. For example, the control unit 301 includes an execution unit 311, a transmission unit 312, and the like and may include other functional units. The storage unit 302 stores, for example, information such as encapsulated data, which will be described later. The communication unit 303 communicates with another device in accordance with an instruction from the control unit 301, for example. For example, the communication unit 303 communicates with the server 101 and other terminals 102. The display unit 304 may display information on a display screen, for example. Details of each of these units and details of the information stored in the storage unit 302 will be described later.

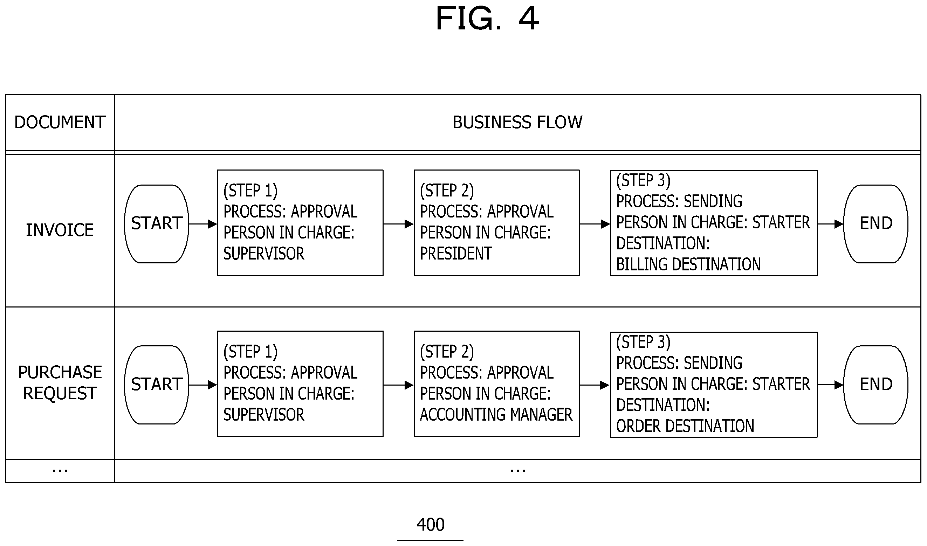

FIG. 4 is a diagram illustrating the business information 400 according to the embodiment. In the business information 400, for example, records are registered in which documents and business flows are associated with each other. In the document in the business information 400, for example, template data of the document to be processed by the business flow is registered. For example, the documents include contracts, invoices, requests, applications, and the like. In addition, in the business flow in the business information 400, for example, a business flow to be executed for the document of the record is registered. For example, in FIG. 4, for the invoice, a business flow including a plurality of steps such as approval and sending of the invoice is registered as a flow of the task for issuing an invoice. In addition, for the purchase request, a business flow including a plurality of steps such as purchase request approval process and sending process is registered as a flow of requesting a purchase. Furthermore, as depicted in FIG. 4, the business flow in the business information 400 may include information regarding the person in charge who executes the process, the destination, and the like, in addition to the information indicating the processing contents such as approval and sending executed in each step.

Note that, for example, the separation between steps in the business flow may be executed based on the person in charge who executes the task, the terminal 102 where the task is performed, and the like. In addition, the separation between steps in the business flow according to the embodiment is not limited to this, and separation may be performed based on other information. FIG. 4 depicts an example in which steps are divided in the business flow for each person in charge who is in charge of the task. The business flow may be, for example, business process model and notation (BPMN) data. Alternatively, the business flow may be, for example, business process execution language (BPEL) data describing the flow in extensible markup language (XML).

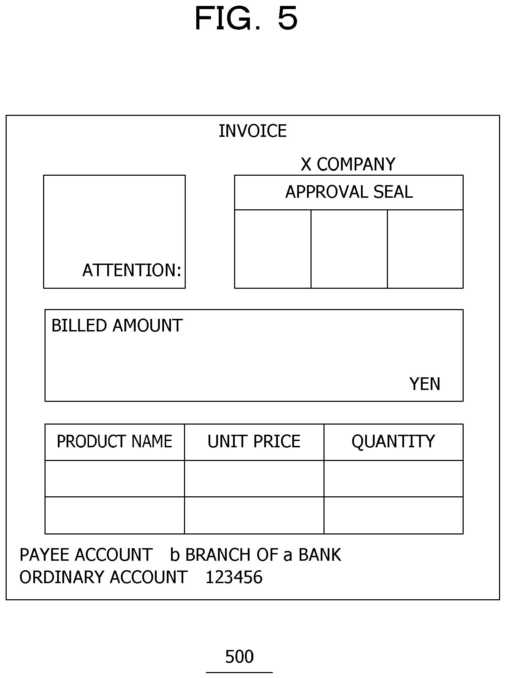

FIG. 5 is a diagram illustrating the document 500 according to the embodiment. In FIG. 5, an invoice template is depicted as an example of the document 500. For example, a person in charge who is in charge of the task for issuing an invoice may fill in billing-related information in the document 500 for invoice and then may use the filled document 500 to apply for the corresponding business flow.

For example, in the case of the document 500 for invoice in FIG. 5, the person in charge may fill in information in the destination column (in FIG. 5, the column of "Attention:"), the billed amount column, and the product name, unit price, and quantity columns. In addition, as for the approval seal column, in one example, the control unit 201 of the server 101 may attach the imprints of the seals of the person in charge and the approvers (such as the manager and the president as an example) when generating encapsulated data, which will be described later. Note that the imprint of the seal may be, for example, an image made by putting the seal, and in one example, the seal of an approver, such as a manager's seal or a president's seal, may be used. In addition, the control unit 201 of the server 101 may attach an electronic signature to the document after filling in information in the document 500 is completed.

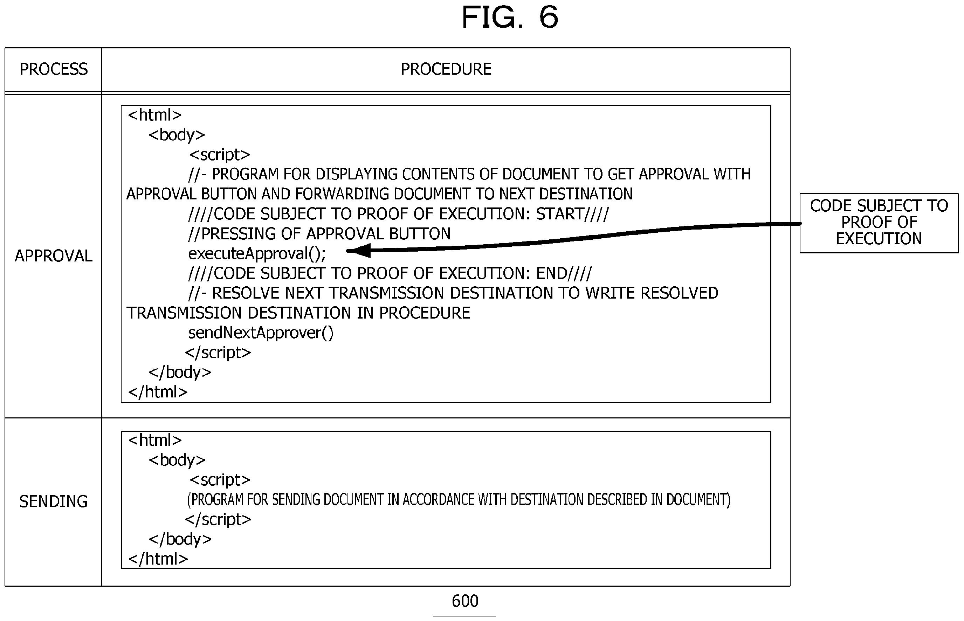

FIG. 6 is a diagram illustrating the process information 600 according to the embodiment. In the process information 600, records are registered in which processes and procedures executable by a computer to execute the processes are associated with each other. For the process in the process information 600, for example, a process to be executed in the step of the business flow in the business information 400 may be registered. In addition, the procedure in the process information 600 describes, for example, a processing program for causing a computer to execute the process in the record. For example, the procedure may be written in a programming language such as JavaScript (registered trademark), or may be written in another programming language. The procedure includes an RPA robot in one example.

In addition, in the program of the procedure, a mark may be appended to the code subject to proof of execution. In the example in FIG. 6, the procedure corresponding to the approval process includes the mark "////code subject to proof of execution: start////" indicating the start position of the code subject to proof of execution, and the mark "////code subject to proof of execution: end////" indicating the end position of the code subject to proof of execution. Therefore, the control unit 201 can specify the position of the code subject to proof of execution, in the program of the procedure from the mark. Note that the specification of the position of the code subject to proof of execution is not limited to this. By setting a predetermined condition for specifying the code corresponding to the object of which the execution is to be proven, the code that satisfies the predetermined condition can be specified as the code subject to proof of execution. For example, in another embodiment, the data in which the code subject to proof of execution is registered may be stored in the storage unit 202 in advance, and the control unit 201 may specify the code subject to proof of execution by searching the procedure for the registered code.

Note that the code subject to proof of execution may be, for example, a code as the object desired to be proven that the code has been executed in the execution of the procedure. In one example, the code subject to proof of execution may be a code that is supposed to be completed in order to advance the business flow to the next step. For example, in the example of approval in FIG. 6, in order to advance the approval step to the next step, the person in charge who executes the procedure is supposed to press the approval button to obtain approval. Therefore, the code that accepts pressing of the approval button may be treated as the code subject to proof of execution, and in the example of approval in FIG. 6, marks are written before and after the code that accepts pressing of the approval button. Then, the control unit 201 can detect the position of the code subject to proof of execution, for example, by the marks and add an operation code that causes the execution of the operation for proving the execution of the code subject to proof of execution, according to the position of the code subject to proof of execution. Note that, hereinafter, the operation code that causes the execution of the operation for proving the execution of the code subject to proof of execution will be sometimes referred to as a proof-of-execution operation code. Further details on adding the proof-of-execution operation code to the procedure will be described later.

In addition, in the process information 600, the procedure does not have to describe the information on the notification destination to which the data is to be transmitted after the process is completed. In one example, the control unit 201 may specify the information on the notification destination based on the information regarding the person in charge, the destination, and the like of the next step of the business flow in the business information 400 and write the specified information in the procedure.

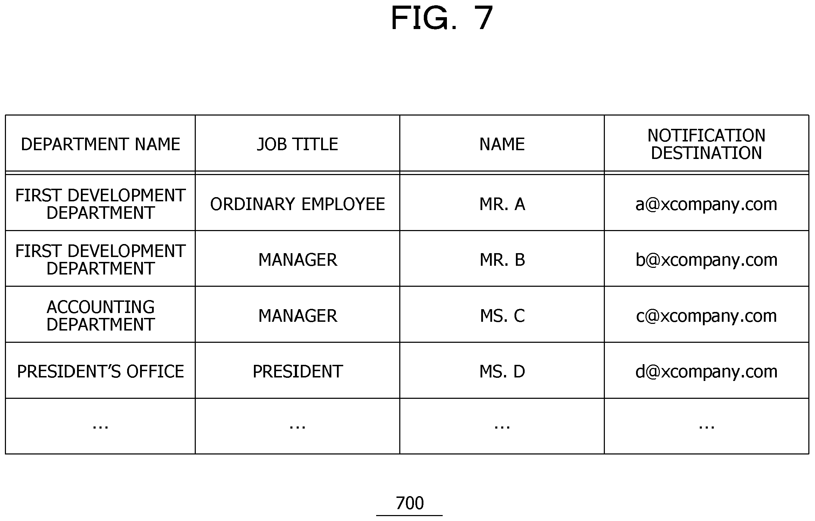

FIG. 7 is a diagram illustrating the notification destination information 700 according to the embodiment. In the notification destination information 700, for example, information on the notification destination to be notified of information in the step of the business flow registered in the business information 400 is registered. For example, in FIG. 7, in the notification destination information 700, records are registered in which department names, job titles, names, and notification destinations are associated with each other. The record registered in the notification destination information 700 may have, for example, information about the person in charge who is in charge of the step of the business flow, the person in charge of the business partner to whom the execution result of the business flow is sent, and the like. By referring to the notification destination information 700, the control unit 201 can specify the notification destination to be notified of information when the step of the business flow in the business information 400 is completed. For example, the notification destination may be a mail address, a path to a predetermined folder in the network, or the like.

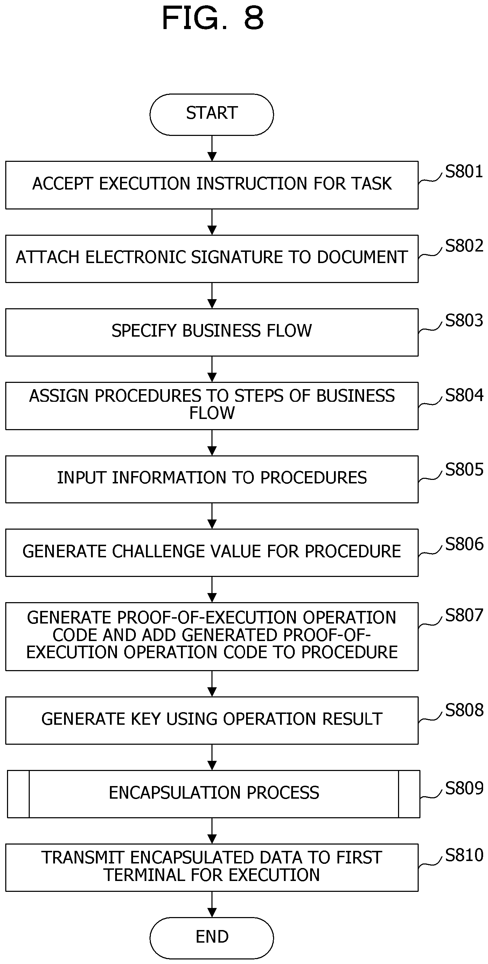

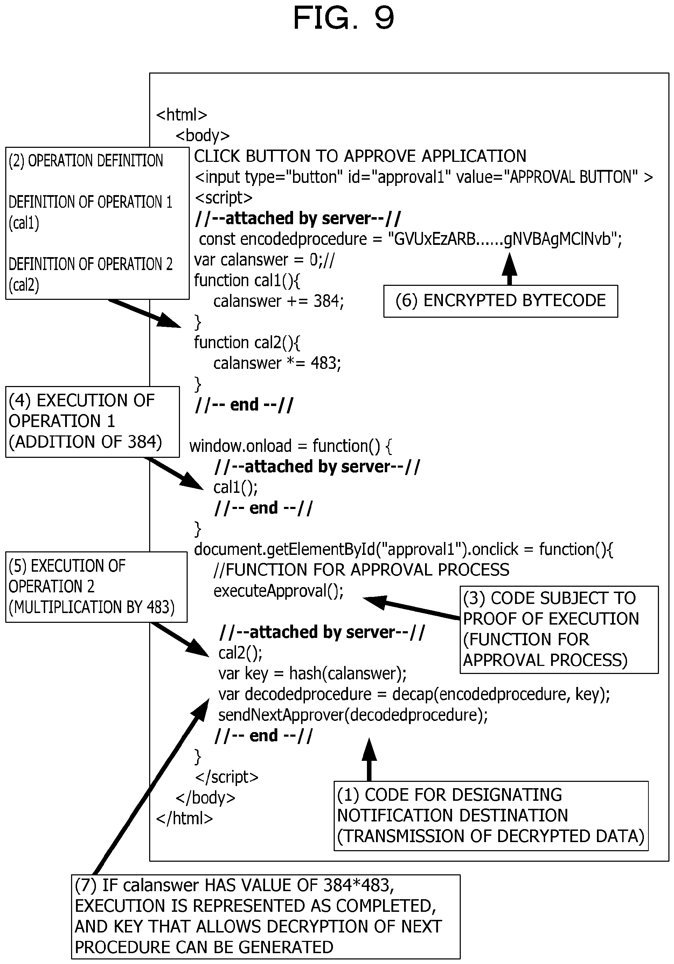

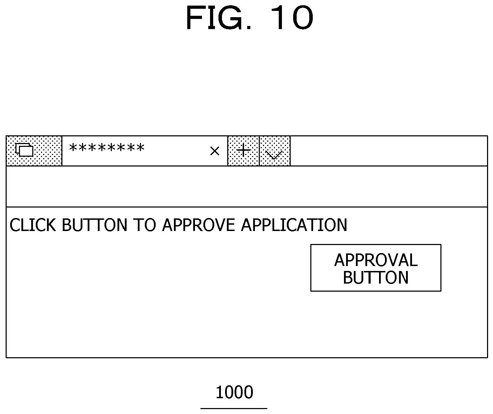

FIG. 8 is a diagram illustrating a work flow of an encapsulated data transmission process according to the embodiment. In addition, FIG. 9 is a diagram illustrating an approval procedure according to the embodiment. FIG. 9 depicts a program for approval created with JavaScript as an example. When the program in FIG. 9 is executed, for example, a window 1000 in FIG. 10 is displayed on a browser, and the approver can input the intention of approval by pressing the approval button.

Hereinafter, the encapsulated data transmission process according to the embodiment will be described with reference to FIGs. 8 and 9. For example, the control unit 201 of the server 101 may start the work flow in FIG. 8 when an execution instruction for the encapsulated data transmission process is input.

In S801, the control unit 201 of the server 101 accepts the execution instruction for a task from the terminal 102 used by the person in charge of the task. The person in charge of the task may, for example, be coupled to the server 101 via the terminal 102 and acquire, from the server 101, the template for a document corresponding to the task to be executed registered in the business information 400. Then, the person in charge may transmit a document obtained by filling in information in the acquired template for the document, to the server 101 via the terminal 102, to input the execution instruction for the task to the server 101. When the control unit 201 of the server 101 accepts the input of the execution instruction for the task, the flow proceeds to S802.

In S802, the control unit 201 of the server 101 attaches an electronic signature to the document included in the accepted execution instruction for the task. The electronic signature may be an electronic seal (e-seal) issued by the server 101 in one example.

In S803, the control unit 201 of the server 101 specifies the business flow corresponding to the received execution instruction for the task. For example, the control unit 201 may specify the business flow corresponding to the document included in the accepted execution instruction for the task, from the business information 400. For example, when the document included in the execution instruction for the task accepted in S801 is an invoice, the control unit 201 may read the business flow corresponding to the invoice from the business information 400.

In S804, the control unit 201 assigns procedures to each step of the read business flow. For example, the control unit 201 may specify, from the process information 600, the procedures corresponding to the processes for each step of the business flow read from the business information 400 to assign the specified procedures to each step.

As an example, in the business flow for invoice in the business information 400, (step 1) and (step 2) are approval processes, and the control unit 201 may assign the procedure corresponding to the approval process in the process information 600. In addition, in the business flow for invoice, (step 3) is a sending process, and the control unit 201 may assign the procedure corresponding to the sending process in the process information 600.

In S805, the control unit 201 inputs information to the procedures corresponding to each step. For example, the control unit 201 may input the information on the notification destination to the procedure.

For example, the procedure in FIG. 9 describes a code for designating the notification destination (for example, (1) in FIG. 9). In S805, the control unit 201 may, for example, write information indicating the notification destination into the code for designating the notification destination. Note that the control unit 201 may acquire the information on the notification destination corresponding to the person in charge or the destination of the next step, from the notification destination information 700, for example, based on the information on the person in charge or the destination set in the step of the business flow. This allows the control unit 201 to notify the person in charge of the next step of the business flow or the person in charge of the business partner of the information obtained by the process of the step.

Note that, in the above, an example is described in which the information on the notification destination for the person in charge of the business partner is acquired from the notification destination information 700, but the embodiment is not limited to this. In another example, the control unit 201 may acquire the information on the notification destination for the person in charge of the business partner, from the filled document accepted in S801.

In S806, the control unit 201 generates a challenge value for the procedure. Note that the challenge values may be generated for each of the procedures corresponding to each step, for example. In addition, in another example, a challenge value common to a plurality of procedures may be used. The challenge value can be acquired, for example, from a function that outputs different results each time the function is executed. A random function, a shuffle function, or the like can be used as an example of the function that outputs different results each time the function is executed. The challenge value may be a random number in one example.

In S807, the control unit 201 generates the proof-of-execution operation code using the challenge value and adds the generated proof-of-execution operation code to the procedure to generate an additional procedure. Accordingly, the additional procedure includes, for example, the processing program of the procedure and the proof-of-execution operation code. For example, in FIG. 9, the code from °//--attached by server--//" to "//--end--//" represents the code added to the procedure by the control unit 201. The proof-of-execution operation code is, for example, a code that causes the execution of an operation for proving the execution of the code subject to proof of execution. Note that the additional procedures generated by adding the proof-of-execution operation code may be referred to as, for example, the first program and the second program.

In addition, for example, the control unit 201 specifies the position of the code subject to proof of execution, which satisfies a predetermined condition, in the procedure and adds the proof-of-execution operation code to the procedure according to the specified position of the code subject to proof of execution to generate the additional procedure. In one example, the control unit 201 may add the proof-of-execution operation code to the position of the mark indicating the position of the code subject to proof of execution, by replacing the mark with the proof-of-execution operation code. Note that deleting the mark may make it difficult to specify where in the procedure the code subject to proof of execution is located and may achieve improvement in the security.

For example, in FIG. 9, at the beginning of the program of the procedure, a program defining the operation contents of operations 1 and 2 is described as a proof-of-execution operation code ((2) in FIG. 9). In the example in FIG. 9, an operation code that adds 384 to the variable: calanswer is described as the operation 1: cal1. In addition, an operation code that multiplies the variable: calanswer by 483 is described as the operation 2: cal2. Note that the numerical value: 384 used for the operation 1: call and the numerical value: 483 used for the operation 2: cal2 are both challenge values generated for the procedure. For example, the challenge value is generated each time the business flow is executed, and a proof-of-execution operation code that executes an operation that uses the generated challenge value is added to the procedure. This may make the operation results obtained based on the execution of the proof-of-execution operation code different each time the business flow is executed. As a result, replay attacks and the like may be dealt with.

In addition, in the program in FIG. 9, the function for the approval process: executeApproval(); is indicated as the code subject to proof of execution ((3) in FIG. 9). Then, as the proof-of-execution operation code, the operation code that executes the operation 1: cal1 and the operation code that executes the operation 2: cal2 are added so as to sandwich the code subject to proof of execution ((4) and (5) in FIG. 9). In this case, when the program is executed in the order of the operation code for the operation 1 → the code subject to proof of execution --+ the operation code for the operation 2 in the execution of the procedure, it is assumed that the operation result to be used for key generation, which will be described later, is obtained.

For example, in the program in FIG. 9, the value of the variable: calanswer used to acquire the operation result is initialized to zero first. Thereafter, 384 is added in the execution of the operation 1: cal1, and the calanswer has 384. Subsequently, when the operation 2 is executed after the execution of the code subject to proof of execution, 483 is multiplied to give calanswer = 384 × 483 = 185472, and the operation result: 185472 is obtained. Note that, for example, when the operations 1 and 2 are not executed, only one of the operations 1 and 2 is executed, or the operations 1 and 2 are executed in a different order such as the operation 2 --+ the operation 1 in the execution of the procedure, the value of calanswer as the operation result does not have 185472. Therefore, if the value of calanswer as the operation result after executing the procedure has 185472, it may be proven that the code subject to proof of execution has been executed.

Note that in the process in S807, the control unit 201 may add different proof-of-execution operation codes to the procedures for each step. This may enhance the security strength. However, in another example, the control unit 201 may add a proof-of-execution operation code common to the procedures for a plurality of steps.

Subsequently, in S808, the control unit 201 generates a key using the operation result based on the execution of the operation indicated by the proof-of-execution operation code added to the procedure. For example, the control unit 201 may acquire the operation result by executing at least the proof-of-execution operation code from the additional procedure generated in S807 and generate the key using the operation result. In one example, the control unit 201 may use the operation result as it is as the key. In addition, in another example, the control unit 201 may generate the key with a predetermined algorithm using the operation result. For example, the control unit 201 may acquire a hash value of the operation result and use the obtained hash value to generate the key with a common key encryption algorithm such as advanced encryption standard (AES)256, RC4, and data encryption standard (DES). Note that, for example, a hash function such as secure hash algorithm (SHA)256, SHA2, and message digest (MD)5 can be used to acquire the hash value.

In S809, the control unit 201 executes an encapsulation process using the generated key. Then, in S810, the control unit 201 transmits encapsulated data obtained by the encapsulation process to the terminal that is to execute the first step of the business flow, and this work flow ends. Note that the control unit 201 may acquire the destination for the terminal that is to execute the first step of the business flow, from the notification destination information 700, for example.

In addition, in the encapsulation process executed in S809, the control unit 201 may encrypt the procedure for the next step in the business flow, for example, using the key generated for the procedure for the step. For example, when encryption is executed in this manner, the operation result obtained in the execution of the procedure can be used to generate a key, and the generated key can be used to decrypt the procedure for the next step.

In addition, for the final step of the business flow in the encapsulation process, the control unit 201 may encrypt the document, using the key generated for the procedure for the final step. For example, when encryption is executed in this manner, the operation result obtained in the execution of the procedure for the final step can be used to generate a key, and the generated key can be used to decrypt the document.

In addition, the proof-of-execution operation code to be added to the procedure may be added such that, as described above, when the code subject to proof of execution is executed in the execution of the procedure, the operation result that successfully decrypts the procedure for the next step is obtained. On the other hand, the proof-of-execution operation code to be added to the procedure may be added such that, when the code subject to proof of execution is not executed in the execution of the procedure, the operation result that successfully decrypts the procedure for the next step is no longer obtained. Then, for example, it is assumed that the procedure for the next step is successfully decrypted using the operation result obtained in the execution of the procedure, and the procedure for the next step is now permitted to be executed. In this case, it may be proven that the code subject to proof of execution has been certainly executed in the procedure from which the operation result was obtained.

Note that the proof-of-execution operation code may be added to the procedure such that the code subject to proof of execution is sandwiched in the procedure, for example, as described above in the explanation of the process in S807. That is, for example, the control unit 201 may add the proof-of-execution operation code to the procedure so as to add an anterior operation code before the position of the code subject to proof of execution and also add a posterior operation code after the position of the code subject to proof of execution. In addition, the operation result that successfully decrypts the procedure for the next step may be obtained, for example, when the operation of the posterior operation code is executed using a primary operation result obtained in the execution of the anterior operation code.

For example, by adding the proof-of-execution operation code to the procedure in this manner, if the procedure for the next step is successfully decrypted using the operation result obtained based on the execution of the proof-of-execution operation code, it may be proven that the code subject to proof of execution has been executed.

Note that the addition of the proof-of-execution operation code to the procedure is not limited to the above example. For example, the proof-of-execution operation code may be added to the procedure in another format that ensures that the operation result that successfully performs decryption is obtained when the code subject to proof of execution is executed, but when the code subject to proof of execution is not executed, the operation result that successfully performs decryption is no longer obtained.

As another example, the proof-of-execution operation code may be added to the procedure so as to execute an operation using the return value of a function included in the code subject to proof of execution. In this case, the return value is obtained if the code subject to proof of execution is executed in the execution of the procedure, but the return value is no longer obtained if the code subject to proof of execution is not executed. Therefore, the operation result can be made different depending on whether or not the code subject to proof of execution has been executed.

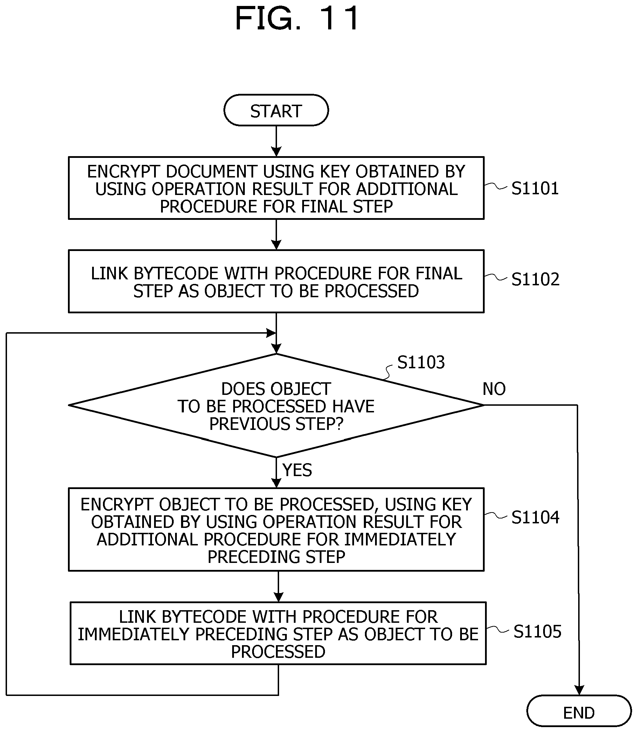

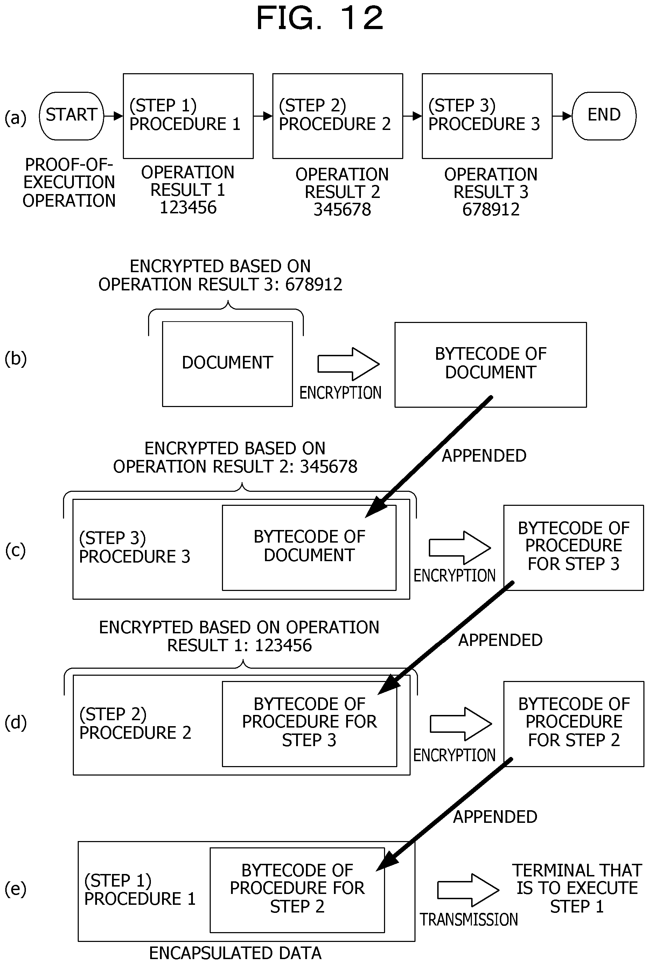

Subsequently, an example of the encapsulation process according to the embodiment will be described in further detail with reference to FIGs. 11 and 12.

FIG. 11 is a diagram illustrating a work flow of the encapsulation process according to the embodiment. For example, the control unit 201 of the server 101 may start the work flow in FIG. 11 when proceeding to S809 of the work flow in FIG. 8.

In S1101, the control unit 201 of the server 101 encrypts the document using the key obtained by using the operation result in S808 for the additional procedure for the final step of the business flow and generates a bytecode of the document. The bytecode may be, for example, data of a byte string obtained by encryption and, in one example, may be represented by ASCII characters. The bytecode may be referred to as, for example, encrypted data. In addition, the encryption object may include the electronic signature of the document attached in S802. Encryption may be executed using, for example, a common key encryption algorithm.

In S1102, the control unit 201 of the server 101 links the bytecode of the document with the procedure for the final step as the object to be processed. In one example, the control unit 201 may store the bytecode in a constant of the procedure, as indicated by (6) in FIG. 9.

In S1103, the control unit 201 determines whether or not the step to be processed has a previous step. When the step to be processed has a previous step (YES in S1103), the flow proceeds to S1104.

In S1104, the control unit 201 encrypts the procedure to be processed, using the key obtained by using the operation result in S808 for the additional procedure for the immediately preceding step. Note that the encryption object may include the bytecode of the procedure positioned downstream of the procedure to be processed in the business flow and the bytecode of the document. Encryption may be executed using, for example, a common key encryption algorithm.

In S1105, the control unit 201 links the bytecode obtained in the process in S1104 with the procedure for the immediately preceding step as the object to be processed, and the flow returns to S1103. In one example, the control unit 201 may store the bytecode in a constant of the procedure for the immediately preceding step treated as the object to be processed, as indicated by (6) in FIG. 9.

In addition, when there is no step before the step to be processed in S1103 (NO in S1103), this work flow ends, and the flow proceeds to S810.

According to the above work flow in FIG. 11, the control unit 201 of the server 101 can generate the encapsulated data in which the procedures for the steps of the business flow are encrypted in accordance with the execution order of the steps. Note that the encapsulated data may include the procedure for the first step of the business flow without being encrypted.

FIG. 12 is a diagram illustrating a flow of the encapsulation process according to the embodiment indicated by the work flow in FIG. 11.

FIG. 12(a) illustrates a business flow including three steps from a step 1 to a step 3 and further indicates an operation result 1 to an operation result 3 as operation results based on the execution of the operations indicated by the proof-of-execution operation codes added to each step.

In addition, FIG. 12(b) illustrates encryption of a document, and the control unit 201 encrypts the document using the operation result 3: 678912 of the final step 3 and acquires the bytecode of the document.

FIG. 12(c) illustrates encryption of a procedure 3 for the step 3, which is the final step of the business flow. After appending the bytecode of the document obtained in FIG. 12(b) to the procedure for the step 3, the control unit 201 encrypts the procedure for the step 3 using the operation result 2: 345678 of the step 2 and acquires the bytecode of the procedure for the step 3. Note that the bytecode of the procedure for the step 3 may include, for example, data of the bytecode of the document in FIG. 12(b).

FIG. 12(d) illustrates encryption of a procedure 2 for the step 2, which is the step immediately preceding the step 3. After appending the bytecode of the procedure for the step 3 encrypted in FIG. 12(c) to the procedure for the step 2, the control unit 201 encrypts the procedure for the step 2 using the operation result 1: 123456 of the step 1 and acquires the bytecode of the procedure for the step 2. Note that the bytecode of the procedure for the step 2 may include, for example, data of the bytecode of the procedure for the step 3 in FIG. 12(c).

FIG. 12(e) illustrates transmission of the encapsulated data. The control unit 201 transmits the encapsulated data obtained by appending the bytecode of the procedure for the step 2 encrypted in FIG. 12(d) to the procedure for the step 1, to the terminal 102 that is to execute the step 1.

Note that, when receiving the encapsulated data, the terminal 102 that is to execute the step 1 can acquire the operation result 1: 123456 of the step 1, by executing the procedure for the step 1 in the received encapsulated data. Then, the procedure for the step 2 can be acquired by decrypting the bytecode of the procedure for the step 2, using the operation result 1: 123456. Thereafter, by repeating the execution of the procedure and the decryption using the operation result obtained in the execution of the procedure, the document can be finally decrypted. In addition, when the document is successfully decrypted, it may be guaranteed that the codes subject to proof of execution have been executed in the procedures corresponding to each step of the business flow.

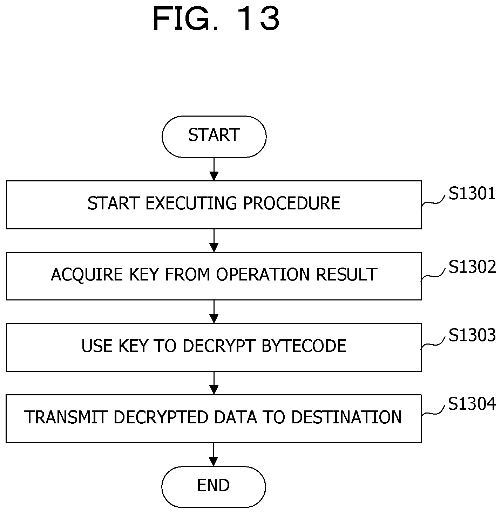

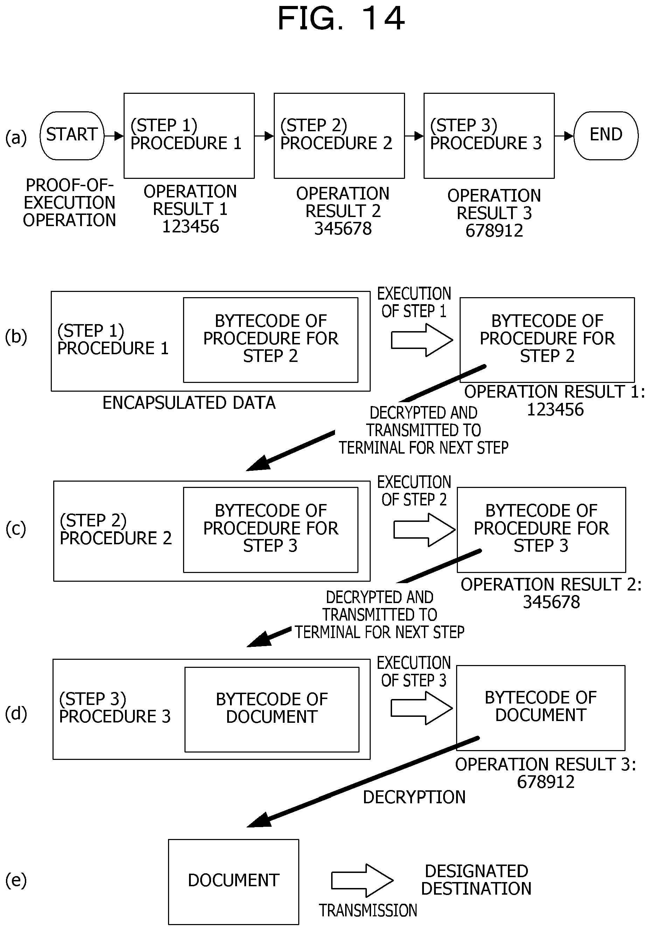

An execution process for the steps of the business flow executed by the control unit 301 of the terminal 102 will be described below with reference to FIGs. 13 and 14. FIG. 13 is a diagram illustrating a work flow of the execution process for steps of the business flow according to the embodiment. For example, the control unit 301 of the terminal 102 may start the work flow in FIG. 13 when the encapsulated data is received.

In S1301, the control unit 301 of the terminal 102 starts executing a procedure included in the received encapsulated data. This may cause the control unit 301 of the terminal 102 to execute the task of the step of the business flow corresponding to the procedure. For example, the approval procedure may display the window 1000 on a display screen of the display unit 304 of the terminal 102 to accept the input of the approval instruction and execute the approval task.

Then, in S1302, the control unit 301 of the terminal 102 acquires the key using the operation result based on the execution of the proof-of-execution operation code when executing the procedure.

In S1303, the control unit 301 of the terminal 102 uses the key to decrypt the bytecode. For example, as indicated by (7) of FIG. 9, the data can be correctly decrypted if the same operation result as the operation result used for encryption at the time of generation of the bytecode is obtained.

In S1304, the control unit 301 of the terminal 102 transmits the decrypted data to the destination. The destination of the decrypted data may be written in the procedure in the process in S805 by the server 101, for example. Note that, for example, when the executed procedure includes subsequent steps in the business flow, the decrypted data may include the procedure for the next step and the remaining bytecodes. In addition, for example, when the executed procedure is the final step in the business flow, the decrypted data may include the document and the electronic signature.

FIG. 14 is a diagram illustrating a flow of decrypting the encapsulated data according to the embodiment.

FIG. 14(a) illustrates a business flow including three steps from a step 1 to a step 3 and further indicates an operation result 1 to an operation result 3 as operation results based on the execution of the operations indicated by the proof-of-execution operation codes added to each step.

FIG. 14(b) illustrates decryption of the encapsulated data. The control unit 301 of the terminal 102 that is to execute the first step 1 of the business flow executes the process of the step 1 by executing the procedure for the step 1. In addition, the control unit 301 of the terminal 102 for the step 1 acquires the operation result 1: 123456 of the step 1, by executing the procedure for the step 1. Then, the control unit 301 of the terminal 102 for the step 1 decrypts the bytecode of the procedure for the step 2, using the operation result 1: 123456, and transmits the procedure for the step 2 to the terminal 102 for the next step 2.

FIG. 14(c) illustrates the execution of the step 2. When receiving the procedure for the step 2, the control unit 301 of the terminal 102 that is to execute the step 2 executes the process of the step 2 by executing the procedure for the step 2. In addition, the control unit 301 of the terminal 102 for the step 2 acquires the operation result 2: 345678 of the step 2, by executing the procedure for the step 2. Then, the control unit 301 of the terminal 102 for the step 2 decrypts the bytecode of the procedure for the step 3, using the operation result 2: 345678, and transmits the procedure for the step 3 to the terminal 102 for the next step 3.

FIG. 14(d) illustrates the execution of the step 3. When receiving the procedure for the step 3, the control unit 301 of the terminal 102 that is to execute the step 3 executes the process of the step 3 by executing the procedure for the step 3. In addition, the control unit 301 of the terminal 102 for the step 3 acquires the operation result 3: 678912 of the step 3, by executing the procedure for the step 3. Then, the control unit 301 of the terminal 102 for the step 3 decrypts the bytecode of the document using the operation result 3: 678912 and acquires the document.

FIG. 14(e) illustrates transmission of the document. The control unit 301 of the terminal 102 for the step 3 may transmit transmission data including the acquired document to the destination designated in the step 3 of the business flow. Note that the transmission data may include an electronic signature for the document.

As described above, by performing the encapsulation process according to the embodiment, it may be guaranteed that each step of the business flow has been executed in accordance with the execution order, when the document can be acquired from the encapsulated data.

In addition, in the above embodiment, the challenge value is generated each time the business flow is executed, and the proof-of-execution operation code using the challenge value is added to the procedure for the step. Therefore, each time the business flow is executed, the operation result obtained based on the execution of the operation indicated by the proof-of-execution operation code will have a different value, and replay attacks and the like may be dealt with.

Note that, in FIGs. 13 and 14 of the above embodiment, an example in which the control unit 301 of the terminal 102 uses the operation result obtained in the execution of the procedure also to execute decryption of the bytecode has been described. However, the embodiment is not limited to this. In another embodiment, the control unit 301 of the terminal 102 may notify the terminal 102 that is to execute the next step of information (such as an encryption key as an example) for decrypting the operation result or the bytecode generated based on the operation result, together with the bytecode. That is, for example, instead of the processes in S1302 to S1304 described above, the control unit 301 may transmit the information for decrypting the operation result or the bytecode generated based on the operation result to the destination together with the bytecode.

In addition, in the above embodiment, an example of proving the execution of one code subject to proof of execution by adding the proof-of-execution operation code to the procedure has been described. However, the embodiment is not limited to this. In another embodiment, a proof-of-execution operation code may be added to the procedure to guarantee that a plurality of codes included in the procedure has been executed in a predetermined order.

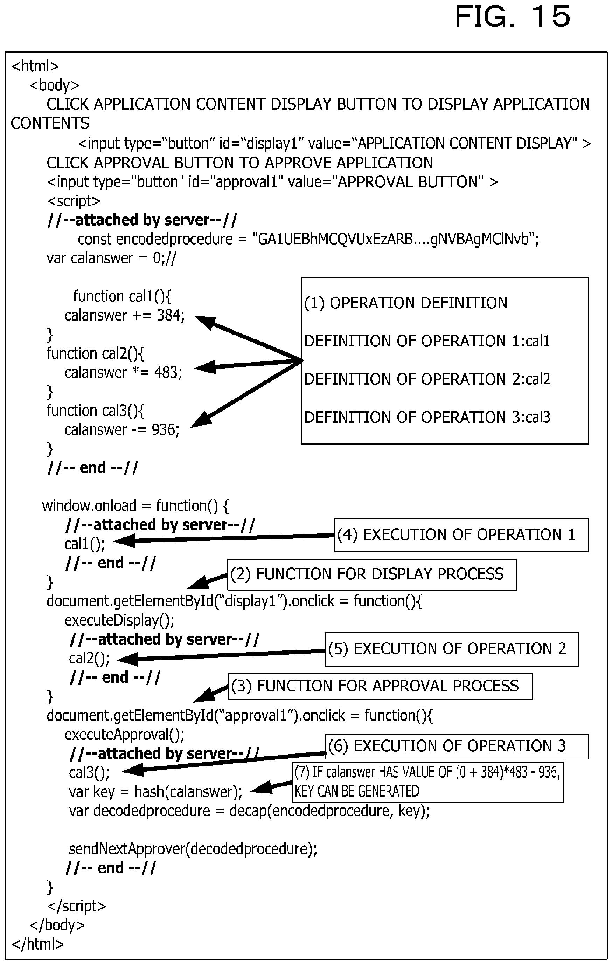

FIG. 15 is a diagram illustrating addition of a proof-of-execution operation code for proving the execution order of a plurality of codes in a procedure according to the embodiment. FIG. 15 illustrates an approval procedure. Note that, in FIG. 15, the code from ""//--attached by server--//" to °//--end--//" represents the code added to the procedure by the control unit 201. Then, in the example in FIG. 15, three operations, namely, the operation 1: call, the operation 2: cal2, and the operation 3: cal3 are defined ((1) in FIG. 15).

For example, in FIG. 15, the variable: calanswer is first initialized to zero. In addition, the operation 1: call performs an operation of adding 384 to calanswer. The operation 2: cal2 performs an operation of multiplying calanswer by 483. The operation 3: cal3 performs an operation of dividing calanswer by 936. Note that the values of 384, 483, and 936 used in these operations may be the challenge values.

In addition, in the example in FIG. 15, it is assumed that the codes subject to proof of execution are a function for a display process ((2) in FIG. 15) and a function for an approval process ((3) in FIG. 15). In this case, the control unit 201 adds the operation code for the operation 1 before the function for the display process ((4) in FIG. 15). In addition, the control unit 201 adds the operation code for the operation 2 after the function for the display process but before the function for the approval process ((5) in FIG. 15). Furthermore, the control unit 201 adds the operation code for the operation 3 after the function for the approval process ((6) in FIG. 15).

In this case, when the procedure in FIG. 15 is executed, the codes will be executed in the order of the operation 1, the operation 2, and the operation 3, and the value of calanswer will have (0 + 384) × 483 - 936 = 184536 ((7) in FIG. 15). On the other hand, if the execution order of the operations is different or some operations are not executed, the operation result: 184536 is no longer obtained.

Accordingly, for example, if calanswer: 184536 is obtained as an operation result when the control unit 301 of the terminal 102 executes the procedure in FIG. 15, it may be guaranteed that the function for the display process is executed and then the function for the approval process is executed. That is, according to the embodiment, it may be guaranteed that a plurality of codes included in a procedure are executed in a predetermined order. Then, by using the operation result obtained when the plurality of codes is executed in a desired predetermined order within a procedure to encrypt the document and the procedure for the next step, also the above-described effect of causing the execution of the steps of the business flow properly in order may be obtained.

As described above, according to the embodiment, when the decryption of the encapsulated data is completed and, for example, data such as a document can be extracted, it may be guaranteed that the steps of the business flow have been executed in a desired order and completed.

In addition, according to the embodiment, the execution of a certain step may be forced to be completed before the execution of another step. In other words, if the procedure executed by a certain step is successfully decrypted, it may be guaranteed that the execution of another procedure preceding the certain step has been completed.

In addition, the above embodiment can be applied to the automatic execution of tasks using RPA, for example, by using an RPA robot as a procedure.

In addition, in the above embodiment, the server 101 may provide a service of generating the encapsulated data, for example. In this case, the server 101 may attach an e-seal issued by the server 101 to data finally extracted as a result of decryption, such as a document as an example. This allows a user of the service to interpret that the business flow corresponding to the encapsulated data all has been executed in order as stipulated, if the data to which the e-seal of the server 101 is attached can obtained from the encapsulated data.

Although the embodiments have been described above, the embodiments are not limited to this. For example, the work flows described above are exemplary, and the embodiments are not limited to this. If feasible, the work flows may be executed by changing the order of processes or may additionally include further process, or some processes may be omitted. For example, in one embodiment, the process in S802 described above may be omitted.

In addition, in the process in S808 in the above embodiment, an example in which the operation result is acquired by executing at least the proof-of-execution operation code from the additional procedure and a key is generated using the operation result has been described. However, the embodiment is not limited to this. For example, if the operation contents of the proof-of-execution operation code to be added to the procedure is predefined, the control unit 201 also can execute the operation and acquire the operation result at the time point when the challenge value is generated before the additional procedure is generated. In this case, the process in S808 may be executed before the process in S807.

In addition, in the above embodiment, an example of generating a key by applying a hash function to the obtained operation result has been described, but the embodiment is not limited to this. In another embodiment, the control unit 201 may generate the key by combining other information such as a program of the additional procedure with the operation result before applying the hash function. This may enhance the security strength.

In addition, in the above embodiment, an operation code that executes numerical computation has been taken as an example of the proof-of-execution operation code, but the embodiment is not limited to this. For example, the operations executed by the proof-of-execution operation codes may include other operations, such as character string concatenation. Furthermore, the operation executed by the proof-of-execution operation code may be carried out using a more complex operation, such as cryptographic computation.

In addition, in another embodiment, by, for example, adding a dummy proof-of-execution operation code to the procedure, it may be made such that the correct way as to which functions have to be executed in what order is known only when the processes are actually executed with the correct procedure, for example. This may enhance the security strength.

In addition, FIGs. 12 and 14 described above depict an example in which encryption is performed sequentially from the final step of the business flow and the encrypted data is nested to be encapsulated, but the embodiment is not limited to this. In another embodiment, when the procedure for the following step is encrypted, the encrypted bytecodes of the subsequent steps and the encrypted document that have already been encrypted may not be included in the encryption object. In this case as well, since the operation result of the proof-of-execution operation code used to decrypt the encrypted data is acquired by executing the steps in the order stipulated in the business flow, the execution order may be forced on tasks.

In addition, the object whose execution timing is to be controlled in the embodiment is not limited to the procedure for the next step. The embodiment can be utilized to control the execution timing of any downstream procedure. Furthermore, the embodiments can be utilized to control the execution timing of a plurality of downstream procedures. In this case, for example, the operation result obtained in the execution of the proof-of-execution operation code added to a certain procedure may be used to encrypt the plurality of downstream procedures.

Alternatively, the embodiment can be utilized to control the execution of at least one downstream procedure to start after waiting for the completion of execution of a plurality of upstream procedures. In this case, for example, a plurality of operation results obtained in the execution of the proof-of-execution operation codes added to the plurality of procedures may be used to encrypt at least one procedure downstream of those procedures.

Note that, in the above embodiment, the control unit 201 of the server 101 works as the generation unit 211 in the process in S807, for example. In addition, in the process in S809, the control unit 201 of the server 101 works as the encryption unit 212, for example. In the process in S810, the control unit 201 of the server 101 works as the transmission unit 213, for example.

In addition, in the above embodiment, the control unit 301 of the terminal 102 works as the execution unit 311 in the process in S1301, for example. In addition, in the process in S1304, the control unit 301 of the terminal 102 works as the transmission unit 312, for example.

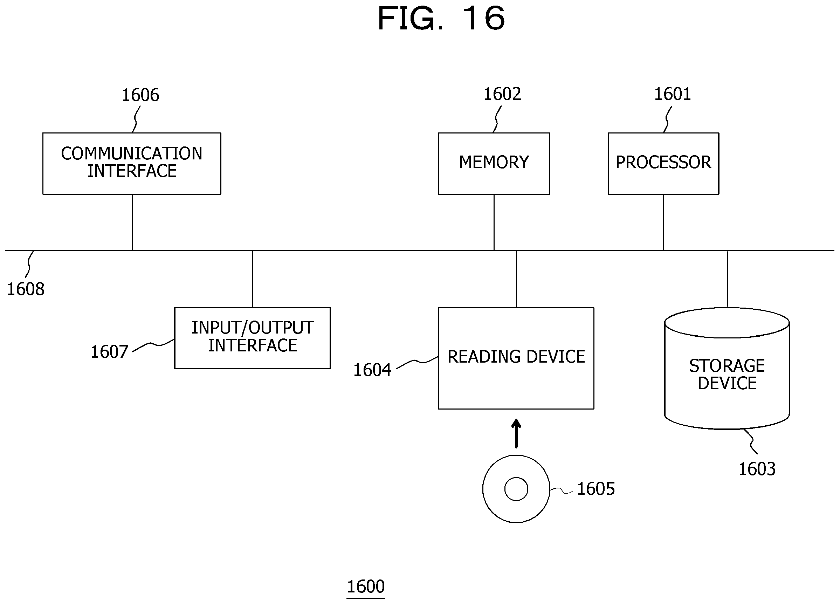

FIG. 16 is a diagram illustrating a hardware configuration of a computer 1600 for implementing the server 101 and the terminal 102 according to the embodiment. The hardware configuration in FIG. 16 for implementing the server 101 and the terminal 102 includes, for example, a processor 1601, a memory 1602, a storage device 1603, a reading device 1604, a communication interface 1606, and an input/output interface 1607. Note that the processor 1601, the memory 1602, the storage device 1603, the reading device 1604, the communication interface 1606, and the input/output interface 1607 are coupled to each other via a bus 1608, for example.

The processor 1601 may be, for example, a single processor, a multiprocessor, or a multicore processor. By using the memory 1602 to execute, for example, a program describing the procedure of the work flows described above, the processor 1601 may provide some or all of the functions of the control unit 201 of the server 101 or the control unit 301 of the terminal 102 described above. For example, by reading and executing the program stored in the storage device 1603, the processor 1601 of the server 101 works as the generation unit 211, the encryption unit 212, and the transmission unit 213. In addition, by reading and executing the program stored in the storage device 1603, the processor 1601 of the terminal 102 works as the execution unit 311 and the transmission unit 312, for example.

The memory 1602 is, for example, a semiconductor memory and may include a RAM area and a ROM area. The storage device 1603 is, for example, a semiconductor memory such as a hard disk or a flash memory, or an external storage device. Note that the RAM is an abbreviation for random access memory. In addition, the ROM is an abbreviation for read only memory.

The reading device 1604 accesses a removable storage medium 1605 in accordance with an instruction from the processor 1601. For example, the removable storage medium 1605 is implemented by a semiconductor device, a medium to and from which information is input and output by magnetic action, a medium to and from which information is input and output by optical action, or the like. Note that the semiconductor device is, for example, a universal serial bus (USB) memory. In addition, the medium to and from which information is input and output by magnetic action is, for example, a magnetic disk. For example, the medium to and from which information is input and output by optical action is a CD-ROM, a DVD, a Blu-ray disc (Blu-ray is a registered trademark), or the like. The CD is an abbreviation for compact disc. The DVD is an abbreviation for digital versatile disk.

The storage unit 202 of the server 101 and the storage unit 302 of the terminal 102 described above include the memory 1602, the storage device 1603, and the removable storage medium 1605, for example. For example, the storage device 1603 of the server 101 stores the business information 400, the documents 500, the process information 600, and the notification destination information 700. In addition, the storage device 1603 of the terminal 102 may store the encapsulated data generated by the server 101, for example.

The communication interface 1606 communicates with another device in accordance with an instruction from the processor 1601. The communication interface 1606 is an example of the communication unit 203 of the server 101 and the communication unit 303 of the terminal 102 described above, for example. The server 101 may communicate with devices such as terminal 102 via the communication interface 1606, for example. In addition, the terminal 102 may communicate with devices such as the server 101 and another terminal 102 via the communication interface 1606, for example.

The input/output interface 1607 may be, for example, an interface between an input device and an output device. The input device is, for example, a device that accepts an instruction from a user, such as a keyboard, a mouse, or a touch panel. The output device is, for example, a display device such as a display or an audio device such as a speaker.

Each program according to the embodiments is provided to the server 101 and the terminal 102 in the following forms, for example.

Installed on the storage device 1603 in advance.

(2) Provided by the removable storage medium 1605.

(3) Provided from a server such as a program server.

Note that the hardware configuration of the computer 1600 for implementing the server 101 and the terminal 102 described with reference to FIG. 16 is exemplary, and the embodiment is not limited to this. For example, a part of the configuration described above may be deleted, or a new configuration may be added. In addition, in another embodiment, for example, some or all of the functions of the control unit 201 of the server 101 and the control unit 301 of the terminal 102 described above may be implemented as hardware including FPGA, SoC, ASIC, PLD, or the like. Note that the FPGA is an abbreviation for field programmable gate array. The SoC is an abbreviation for system-on-a-chip. The ASIC is an abbreviation for application specific integrated circuit. The PLD is an abbreviation for programmable logic device.

Several embodiments have been described above. However, the embodiment is not limited to the embodiments described above, and it may be understood that the embodiment includes various modifications and alternatives of the embodiments described above. For example, it would be understood that various embodiments may be embodied by modifying constituent elements without departing from the spirit and scope of the embodiments. In addition, it would be understood that diverse embodiments may be carried out by appropriately combining a plurality of constituent elements disclosed in the embodiments described above. Furthermore, a person skilled in the art would understand that diverse embodiments may be carried out by deleting some constituent elements from all the constituent elements indicated in the embodiments or by adding some constituent elements to the constituent elements indicated in the embodiments.

### CITATION LIST

### PATENT DOCUMENT

Patent Document 1: Japanese Laid-open Patent Publication No. 2005-56418

### REFERENCE SIGNS LIST

- 100: Control system
- 101: Server
- 102: Terminal
- 105: Network
- 201: Control unit
- 202: Storage unit
- 203: Communication unit
- 211: Generation unit
- 212: Encryption unit
- 213: Transmission unit
- 301: Control unit
- 302: Storage unit
- 303: Communication unit
- 304: Display unit
- 311: Execution unit
- 312: Transmission unit
- 400: Business information
- 500: Document
- 600: Process information
- 700: Notification destination information
- 1000: Window
- 1600: Computer
- 1601: Processor
- 1602: Memory
- 1603: Storage device
- 1604: Reading device
- 1605: Removable storage medium
- 1606: Communication interface
- 1607: Input/output interface
- 1608: Bus

## Claims

1. A control method executed by a computer, comprising:
when accepting execution instructions for a first task and a second task, adding an operation code that causes execution of an operation, to a processing program that corresponds to the first task, and generating a first program that includes the processing program and the operation code;
encrypting a second program that corresponds to the second task to generate encrypted data, by using an operation result obtained based on the execution of the operation; and
transmitting the first program and the encrypted data to a device that corresponds to the first task.

2. The control method according to claim 1, wherein the operation result is obtained by executing at least the operation code from the first program.

3. The control method according to claim 1 or 2, wherein the generating includes adding the operation code according to a position of a code that satisfies a predetermined condition and is included in the processing program that corresponds to the first task.

4. The control method according to claim 3, wherein the generating includes adding the operation code to the processing program such that the operation result is obtained when a code that satisfies the predetermined condition is executed in the execution of the first program, but when the code that satisfies the predetermined condition is not executed, the operation result is no longer obtained, and generating the first program.

5. The control method according to claim 3 or 4, wherein the generating includes adding the operation code to the processing program such that an anterior operation code is added before the position of the code that satisfies the predetermined condition, and a posterior operation code is added after the position of the code that satisfies the predetermined condition, and generating the first program, and
the operation result is obtained when the posterior operation code is executed by using a primary operation result obtained by the execution of the anterior operation code in the execution of the first program.

6. The control method according to claim 3 or 4, wherein the generating includes adding the operation code to the processing program such that the operation is executed by using a return value of a function included in the code that satisfies the predetermined condition, and generating the first program.

7. The control method according to any one of claims 1 to 6, further comprising generating the operation code that causes the execution of the operation, by using a challenge value acquired from a function that outputs different results each time the function is executed.

8. The control method according to any one of claims 1 to 7, wherein the second task is a task of which the execution starts after the execution of the first task is completed in a business flow.

9. The control method according to any one of claims 1 to 8, wherein the generating includes further adding a second operation code that causes the execution of a second operation to a second processing program that corresponds to the second task, and generating the second program, and
the encrypting includes further encrypting data that includes a document to generate second encrypted data, by using a second operation result obtained based on the execution of the second operation.

10. The control method according to claim 9, wherein the data that includes the document includes an electronic signature issued by the computer for the document.

11. A control program for causing a computer to perform processing, the processing comprising:
when accepting execution instructions for a first task and a second task, adding an operation code that causes execution of an operation, to a processing program that corresponds to the first task, and generating a first program that includes the processing program and the operation code;
encrypting a second program that corresponds to the second task to generate encrypted data, by using an operation result obtained based on the execution of the operation; and
transmitting the first program and the encrypted data to a device that corresponds to the first task.

12. An information processing apparatus comprising:
a generation unit of adding, when accepting execution instructions for a first task and a second task, an operation code that causes execution of an operation, to a processing program that corresponds to the first task, and generating a first program that includes the processing program and the operation code;
an encryption unit of encrypting a second program that corresponds to the second task to generate encrypted data, by using an operation result obtained based on the execution of the operation; and
a transmission unit of transmitting the first program and the encrypted data to a device that corresponds to the first task.

13. A control method executed by a computer, comprising
when receiving a first program obtained by adding an operation code that causes execute of an operation to a processing program that corresponds to a first task, and encrypted data in which a second program that corresponds to a second task is encrypted, executing the first program; and
executing transmission of an operation result obtained based on the execution of the operation code in the execution of the first program or information that is generated based on the operation result and configured to decrypt the encrypted data, to a device that corresponds to the second task, together with the encrypted data, or transmission of the second program obtained by decrypting the encrypted data by using the operation result, to the device.
